(19) **Europäisches Patentamt**
**European Patent Office**
**Office européen des brevets**

(11) **EP 2 677 454 B1**

(12) **FASCICULE DE BREVET EUROPEEN**

(45) Date de publication et mention
de la délivrance du brevet:
**18.05.2016 Bulletin 2016/20**

(51) Int Cl.:
*B61L 21/04* (2006.01)       *G06F 11/07* (2006.01)
*G06F 21/64* (2013.01)       *G06F 21/55* (2013.01)
*B61L 19/06* (2006.01)       *G05B 9/03* (2006.01)
*B61L 27/00* (2006.01)       *G06F 11/16* (2006.01)

(21) Numéro de dépôt: **13172857.8**

(22) Date de dépôt: **19.06.2013**

(54) **Calculateur, ensemble de communication comportant un tel calculateur, système de gestion ferroviaire comportant un tel ensemble, et procédé de fiabilisation de données dans un calculateur**

Rechner, Kommunikationseinheit, die einen solchen Rechner umfasst, Eisenbahn-Steuerungssystem, das eine solche Einheit umfasst, und Verfahren zur Erhöhung der Zuverlässigkeit der Daten in einem Rechner

Computer, communication arrangement comprising such a computer, railway management system including such an arrangement, and method for enhancing the reliability of data in a computer

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2012 FR 1255728**

(43) Date de publication de la demande:
**25.12.2013 Bulletin 2013/52**

(73) Titulaire: **ALSTOM Transport Technologies**
**92300 Levallois-Perret (FR)**

(72) Inventeurs:
• **Gallois, Xavier**
**69780 Moins (FR)**

• **Vibert, Guillaume**
**69300 Caluire et Cuire (FR)**

(74) Mandataire: **Domenego, Bertrand**
**Cabinet Lavoix**
**2, place d'Estienne d'Orves**
**75441 Paris Cedex 09 (FR)**

(56) Documents cités:
**EP-A2- 0 621 521**

• **DEJAN LUTOVAC ET AL: "Towards a universal computer interlocking system", FACTA UNIVERSITATIS (NIS) - SERIES: ELECTRONICS AND ENERGETICS, vol. 11, no. 1, 1 janvier 1998 (1998-01-01), pages 25-49, XP055050486,**

**Description**

La présente invention concerne un procédé de fiabilisation de données dans un calculateur, le calculateur étant propre à fournir une donnée de sortie à partir d'une donnée d'entrée, et comportant au moins deux modules de traitement de données, et un organe de calcul relié à chaque module de traitement, le procédé comprenant une étape de calcul, par chaque module de traitement, d'une donnée intermédiaire à partir de la donnée d'entrée, ledit calcul consistant en l'application d'une fonction de calcul à la donnée d'entrée, la fonction de calcul étant identique pour tous les modules de traitement.

La présente invention concerne également un calculateur, propre à fournir une donnée de sortie à partir d'une donnée d'entrée, comportant :

- au moins deux modules de traitement de données, chaque module de traitement comportant des premiers moyens de calcul d'une donnée intermédiaire à partir de la donnée d'entrée, lesdits premiers moyens de calcul étant propres à appliquer une fonction de calcul à la donnée d'entrée, la fonction de calcul étant identique pour tous les modules de traitement,
- un organe de calcul relié à chaque module de traitement.

La présente invention concerne également un ensemble de communication comprenant un tel calculateur.

La présente invention concerne également un système de gestion ferroviaire comprenant un tel ensemble de communication.

On connaît un calculateur du type précité. Un tel calculateur est propre à traiter des données et/ou des informations circulant dans un réseau de communication et est généralement utilisé dans un système de communication sécuritaire, par exemple un système de gestion ferroviaire. Afin d'assurer les fonctions critiques de sécurité requises par le système de gestion ferroviaire, la probabilité d'apparition d'une donnée erronée et non détectable en sortie d'un tel calculateur doit être réduite au maximum. La norme de sécurité ferroviaire européenne EN 50 128 impose, par exemple, que les équipements relatifs à la sécurité des trains soient conçus de manière à ce que leur probabilité de défaillance sur demande soit comprise entre $10^{-9}$ et $10^{-7}$. Une technique connue pour assurer la sécurité est appelée « sécurité composite » et consiste à faire réaliser les mêmes traitements par plusieurs modules de traitement de données d'un même calculateur, puis de procéder à un « vote majoritaire ». A cet effet, chaque module calcule une donnée de sortie à partir d'une même donnée d'entrée. Par ailleurs, un tel calculateur comporte généralement des moyens d'arbitrage aptes à assurer la fonction de « vote majoritaire » entre les données de sortie calculées.

Les moyens d'arbitrage d'un tel calculateur comportent toutefois a minima une couche matérielle, parfois complétée par une couche logicielle. Or, la défaillance d'une telle couche matérielle est susceptible d'entraîner une faille de sécurité pouvant conduire à des incidents critiques pour le système de communication sécuritaire.

Un but de l'invention est donc de proposer un procédé de fiabilisation de données dans un calculateur permettant de s'affranchir de l'utilisation de moyens matériels dédiés pour assurer la fonction de vote majoritaire du calculateur.

A cet effet, l'invention a pour objet un procédé de fiabilisation de données dans un calculateur du type précité, caractérisé en ce qu'il comprend les étapes suivantes :

- le calcul, par chaque module de traitement, d'un code de sécurité intermédiaire à partir de la donnée intermédiaire correspondante,
- la transmission à l'organe de calcul, par chaque module de traitement, du code de sécurité intermédiaire et de la donnée intermédiaire,
- le calcul, par l'organe de calcul, d'un code de sécurité à partir des codes de sécurité intermédiaires,
- la sélection, par l'organe de calcul, d'une donnée intermédiaire parmi les données intermédiaires reçues, la donnée de sortie du calculateur comprenant la donnée intermédiaire sélectionnée, et
- la transmission à destination d'un dispositif de réception, par l'organe de calcul, du code de sécurité et de la donnée de sortie.

Suivant d'autres aspects avantageux de l'invention, le procédé comprend une ou plusieurs des caractéristiques suivantes, prises isolément ou suivant toutes les combinaisons techniquement possibles :

- chaque module de traitement comporte des premiers moyens de mémorisation d'au moins une variable de cryptage et d'une fonction de cryptage, la fonction de cryptage étant identique pour tous les modules de traitement, et lors de l'étape de calcul d'un code de sécurité intermédiaire à partir de la donnée intermédiaire correspondante, ledit calcul consiste à appliquer, par chaque module de traitement, la fonction de cryptage au moins à la donnée intermédiaire et à la variable de cryptage ;
- l'organe de calcul comporte des deuxièmes moyens de mémorisation d'au moins une constante de décryptage et une fonction de consolidation, et lors de l'étape de calcul d'un code de sécurité à partir des codes de sécurité intermédiaires, ledit calcul consiste à appliquer, par l'organe de calcul, la fonction de consolidation à chaque code de sécurité intermédiaire reçu et à la constante de décryptage ;

- le procédé comporte en outre, entre l'étape de calcul d'une donnée intermédiaire et l'étape de calcul d'un code de sécurité intermédiaire, une étape de transmission, par chaque module de traitement, de la valeur de sa donnée intermédiaire aux autres modules de traitement et une étape de test, par chaque module de traitement, de l'existence d'une valeur majoritaire parmi l'ensemble des valeurs des données intermédiaires, la valeur majoritaire étant la valeur la plus fréquente parmi les valeurs de données intermédiaires, si cette valeur existe ;
- si le test d'existence d'une valeur majoritaire est négatif lors de l'étape de test correspondante, le procédé comporte une étape de suppression par l'un des modules de traitement de sa variable de cryptage ;
- le procédé comporte en outre, avant l'étape de calcul d'un code de sécurité intermédiaire, une étape de réinitialisation, par chaque module de traitement, de sa variable de cryptage, ladite étape de réinitialisation étant effectuée de manière synchronisée entre tous les modules de traitement ;
- la donnée de sortie est la donnée intermédiaire sélectionnée par l'organe de calcul lors de l'étape de sélection ;
- le procédé comporte en outre une étape de réception, par le dispositif de réception, du code de sécurité et de la donnée de sortie et une étape de vérification, par le dispositif de réception, de la cohérence entre le code de sécurité et la donnée de sortie.

L'invention a également pour objet un calculateur du type précité, caractérisé en en ce que les premiers moyens de calcul sont propres en outre à calculer un code de sécurité intermédiaire à partir de la donnée intermédiaire correspondante, chaque module de traitement étant propre à transmettre à l'organe de calcul le code de sécurité intermédiaire et la donnée intermédiaire correspondante, et en ce que l'organe de calcul comporte des deuxièmes moyens de calcul d'un code de sécurité à partir des codes de sécurité intermédiaires, l'organe de calcul étant propre à sélectionner une donnée intermédiaire parmi les données intermédiaires reçues et à transmettre le code de sécurité et la donnée de sortie à un dispositif de réception, la donnée de sortie comprenant la donnée intermédiaire sélectionnée.

L'invention a également pour objet un ensemble de communication comprenant un calculateur et un dispositif de réception de données, le calculateur étant propre à fournir un code de sécurité et une donnée, le dispositif de réception comportant des moyens de mémorisation d'un algorithme de contrôle, le dispositif de réception étant propre à recevoir le code de sécurité et la donnée de sortie, et à vérifier, par la mise en oeuvre de l'algorithme de contrôle, la cohérence entre le code de sécurité et la donnée de sortie, caractérisé en ce que le calculateur est tel que défini ci-dessus.

L'invention a également pour objet un système de gestion ferroviaire caractérisé en ce qu'il comprend au moins un ensemble de communication tel que défini ci-dessus.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système de gestion ferroviaire comprenant un calculateur selon l'invention, le calculateur comportant deux modules de traitement de données ;
- la figure 2 est une représentation schématique d'un des modules de traitement de données du calculateur de la figure 1 ; et
- la figure 3 est un organigramme représentant un procédé de fiabilisation de données selon l'invention, mis en oeuvre par le calculateur de la figure 1.

Dans la présente description, on appellera « données de sécurité » des données logiques ou des informations circulant sur un réseau de communication. Le réseau de communication est typiquement un réseau non sécurisé, et chaque donnée de sécurité circule sur le réseau accompagnée d'un code de sécurité. Une donnée de sécurité émise sur le réseau par un dispositif d'émission est acceptée par un dispositif de réception uniquement si le dispositif de réception détermine, au moyen d'un algorithme de contrôle prédéterminé, que la donnée de sécurité émise et le code de sécurité l'accompagnant sont cohérentes.

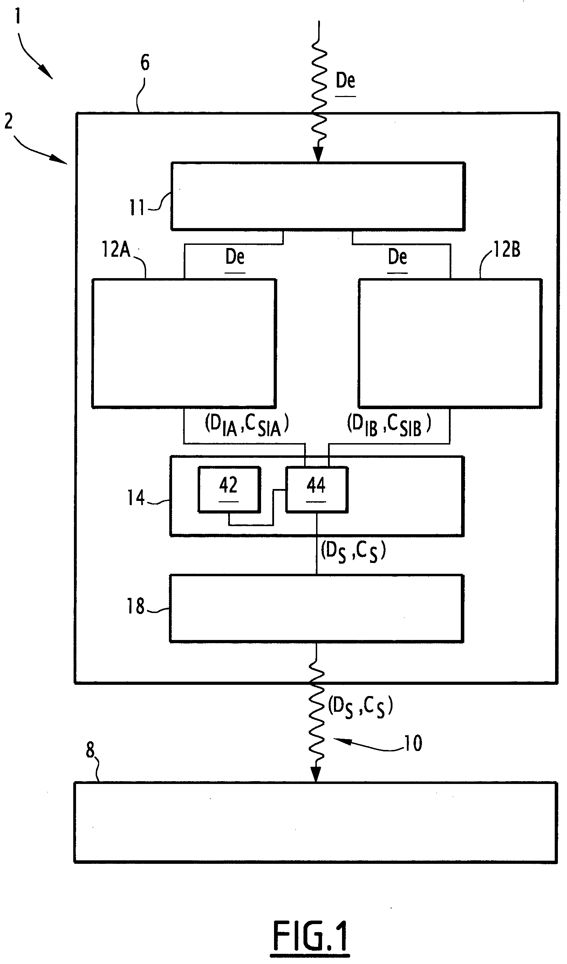

La figure 1 représente un système de gestion ferroviaire 1 comprenant un ensemble de communication 2. Le système de gestion ferroviaire 1 est, par exemple, implanté dans une gare ferroviaire. Il est par exemple propre à déterminer et à faire circuler des ordres de commande à destination de trains, ou à destination de systèmes de sécurité de voies, tels que des aiguillages.

L'ensemble 2 comprend un calculateur 6 et un dispositif 8 de réception de données, relié au calculateur 6 via une liaison de données 10.

Le calculateur 6 comporte des moyens 11 de réception de données, un premier module 12A de traitement de données et un deuxième module 12B de traitement de données, chaque module de traitement 12A, 12B étant relié aux moyens de réception 11. Le calculateur 6 comporte en outre un organe de calcul 14, relié à chaque module de traitement 12A, 12B, et des moyens 18 d'émission de données à destination du dispositif de réception 8, lesdits moyens d'émission 18 étant reliés à l'organe 14.

Le calculateur 6 est un calculateur de sécurité, fixé à demeure au sein du système de gestion ferroviaire 1. Le calculateur 6 est propre à effectuer des calculs sur des données de sécurité circulant sur un réseau de communication du système de gestion ferroviaire 1. Le calculateur 6 est plus particulièrement propre à fournir au dispositif de réception 8 une donnée de sortie $\underline{Ds}$, à partir d'une donnée d'entrée $\underline{De}$, issue d'un dispositif de communication, tel qu'un autre calculateur. Dans l'exemple de réalisation décrit, les données d'entrée $\underline{De}$ et de sortie $\underline{Ds}$ sont des variables formées d'une combinaison de bits, par exemple une combinaison de seize bits.

Le dispositif de réception 8 comporte une mémoire de stockage d'un algorithme de contrôle, non représentée. Le dispositif de réception 8 est par exemple un calculateur de sécurité. Il est propre à recevoir un code de sécurité $C_S$ et la donnée de sortie $\underline{Ds}$ et à vérifier, par la mise en oeuvre de l'algorithme de contrôle, la cohérence entre le code de sécurité $C_S$ et la donnée de sortie $\underline{Ds}$.

La liaison de données 10 est, par exemple, une liaison radioélectrique conforme à la norme IEEE-802-11, généralement appelée liaison Wi-Fi™.

Les moyens de réception 11 sont propres à recevoir la donnée d'entrée $\underline{De}$ et à délivrer cette donnée d'entrée $\underline{De}$ en entrée de chaque module de traitement 12A, 12B.

Le premier module de traitement 12A et le deuxième module de traitement 12B présentent chacun une même structure. Dans la suite, seule la structure du premier module de traitement 12A sera donc décrite.

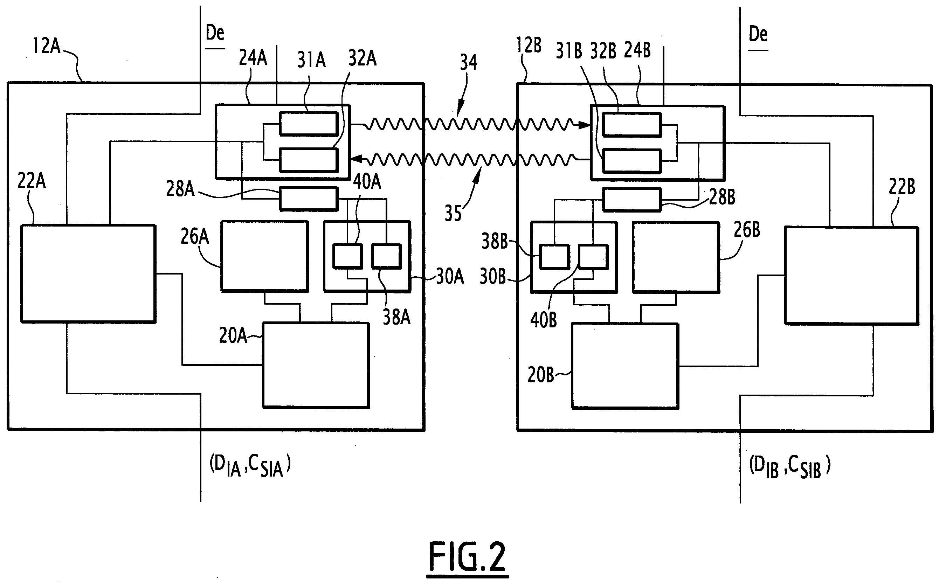

Comme illustré sur la figure 2, le premier module de traitement 12A comporte des premiers moyens de mémorisation 20A, des premiers moyens de calcul 22A, reliés aux moyens de mémorisation 20A, et des moyens de communication 24A, reliés aux premiers moyens de calcul 22A. Le premier module de traitement 12A comporte en outre des moyens d'effacement 26A, reliés aux premiers moyens de mémorisation 20A, et des moyens de synchronisation 28A, reliés aux moyens de communication 24A.

Le premier module de traitement 12A comporte également des moyens de modification 30A, reliés aux premiers moyens de mémorisation 20A et aux moyens de synchronisation 28A.

Dans l'exemple de réalisation, les premiers moyens de mémorisation 20A sont formés d'une mémoire flash, connue en soi. En variante, les premiers moyens de mémorisation 20A sont formés d'une mémoire non-volatile réinscriptible. En variante encore, les premiers moyens de mémorisation 20A sont formés d'une mémoire volatile réinscriptible.

Les premiers moyens de mémorisation 20A sont propres à stocker une variable de cryptage $V_{CA}$, propre au premier module 12A. Dans l'exemple de réalisation, la variable de cryptage $V_{CA}$ est formée d'une combinaison de seize bits. Les premiers moyens de mémorisation 20A sont également propres à stocker une fonction de calcul $\sigma$, une fonction de cryptage Fc et une fonction de réinitialisation $F_{réin}$. Dans l'exemple de réalisation, la fonction de calcul $\sigma$ est la fonction logique « NON », classiquement connue. Par ailleurs, la fonction de cryptage Fc est, dans l'exemple de réalisation, la fonction logique « OU exclusif », classiquement connue. La fonction de réinitialisation $F_{réin}$ est également, par exemple, la fonction logique « OU exclusif ».

Dans l'exemple de réalisation de la figure 2, les premiers moyens de calcul 22A sont formés d'un processeur de données, connu en soi. Les premiers moyens de calcul 22A sont reliés d'une part aux moyens de réception 11 et d'autre part à l'organe 14. Les premiers moyens de calcul 22A reçoivent la donnée d'entrée $\underline{De}$ et fournissent en entrée de l'organe 14 une donnée de sortie intermédiaire $D_{IA}$ et un code de sécurité intermédiaire $\overline{C_{SIA}}$. Les premiers moyens de calcul 22A sont propres à calculer la valeur de la donnée de sortie intermédiaire $D_{IA}$ à partir de la valeur de la donnée d'entrée $\underline{De}$. La donnée $D_{IA}$ est alors, par exemple, exprimée comme suit :

$$D_{IA} = \sigma\,(\underline{De}) \qquad\qquad (1)$$

Dans l'exemple de réalisation, la donnée de sortie intermédiaire $D_{IA}$ est une variable formée d'une combinaison de seize bits.

Les premiers moyens de calcul 22A sont propres en outre à calculer la valeur du code de sécurité intermédiaire $C_{SIA}$ à partir de la valeur de la donnée de sortie intermédiaire $D_{IA}$ et de la valeur de la variable de cryptage $V_{CA}$. Le code de sécurité intermédiaire $C_{SIA}$ est exprimé comme suit :

$$C_{SIA} = Fc\,(F_1(D_{IA}, M_A), V_{CA}) \qquad\qquad (2)$$

$F_1$, respectivement $M_A$, sont une fonction, respectivement une constante, stockées dans les premiers moyens de mémorisation 20A. $F_1$ est par exemple la fonction logique « ET ». Dans l'exemple de réalisation, $M_A$ est une constante formée d'une combinaison de seize bits. $M_A$ est par exemple formée d'une combinaison de huit premiers bits dont la valeur est égale à un et de huit derniers bits dont la valeur est égale à zéro.

**EP 2 677 454 B1**

Les premiers moyens de calcul 22A sont propres en outre à tester l'existence d'une valeur majoritaire parmi plusieurs valeurs de données de sortie intermédiaires, la valeur majoritaire étant la valeur la plus fréquente parmi les valeurs de données de sortie intermédiaires, si cette valeur existe.

Les moyens de communication 24A comportent des moyens d'émission 31 A et des moyens de réception 32A. Les moyens d'émission 31A sont propres à être reliés aux moyens de réception 32B du deuxième module 12B via une liaison de données 34. Les moyens de réception 32A sont propres à être reliés aux moyens d'émission 31 B du deuxième module 12B via la liaison de données 35.

Les liaisons de données 34, 35 sont, par exemple, des liaisons radioélectriques conformes à la norme IEEE-802-11, généralement appelées liaisons Wi-Fi™.

Les moyens d'effacement 26A sont par exemple formés d'un processeur de données. Ils sont propres à effacer la valeur courante de la variable de cryptage $V_{CA}$ stockée au sein de la mémoire 20A.

Les moyens de synchronisation 28A comportent par exemple une horloge propre à délivrer des signaux impulsionnels à des instants $\underline{i}$ réguliers. Les moyens de synchronisation 28A sont propres à envoyer des signaux de synchronisation à destination des moyens de communication 24A et des moyens de modification 30A. Les moyens de synchronisation 28A sont propres en outre à se synchroniser avec les moyens de synchronisation 28B du deuxième module de traitement 12B, via les signaux de synchronisation transmis par les moyens de communication 24A.

Les moyens de modification 30A comportent par exemple un générateur 38A de séquences pseudo-aléatoires et un processeur 40A. Le générateur 38A de séquences pseudo-aléatoires est relié aux moyens de synchronisation 28A et au processeur 40A. Le générateur 38A est propre à fournir au processeur 40A un signal pseudo-aléatoire $S_{pa}$, à la suite de la réception d'un signal de synchronisation délivré par les moyens de synchronisation 28A. Plus précisément, à chaque instant $\underline{i}$, le générateur 38A est propre à fournir au processeur 40A un signal pseudo-aléatoire $S_{pa}(i)$.

Le processeur 40A est relié en outre aux premiers moyens de mémorisation 20A et aux moyens de synchronisation 28A. Le processeur 40A est propre, à la suite de la réception d'un signal de synchronisation délivré par les moyens de synchronisation 28A, à modifier la valeur courante de la variable de cryptage $V_{CA}$ stockée au sein des premiers moyens de mémorisation 20A. Plus précisément, à chaque instant $\underline{i}$ le processeur 40A est propre à déterminer la valeur courante $V_{CA}(i)$ de la variable de cryptage $V_{CA}$, à partir notamment de la valeur précédente $V_{CA}(i-1)$ de la variable de cryptage $V_{CA}$. La valeur courante à l'instant $\underline{i}$ de la variable de cryptage $V_{CA}$ est exprimée comme suit :

$$V_{CA}(i) = F_{réin}\,[S_{pa}(i), V_{CA}(i-1)] \qquad (3)$$

Les moyens de modification 30A sont ainsi propres à modifier la valeur courante de la variable de cryptage $V_{CA}$ stockée au sein des premiers moyens de mémorisation 20A.

Le premier module de traitement 12A est ainsi propre à calculer et à fournir en entrée de l'organe 14 la donnée de sortie intermédiaire $D_{IA}$ et le code de sécurité intermédiaire $C_{SIA}$.

Les premiers moyens de mémorisation 20B du deuxième module de traitement 12B sont propres à stocker une variable de cryptage $V_{CB}$, propre au module 12B, et une fonction de calcul σ, identique à la fonction de calcul σ du premier module de traitement 12A. Dans l'exemple de réalisation, la variable de cryptage $V_{CB}$ est formée d'une combinaison de seize bits. Les premiers moyens de mémorisation 20B sont également propres à stocker une fonction de cryptage Fc, identique à la fonction de cryptage Fc du premier module de traitement 12A, et une fonction de réinitialisation $F_{réin}$, identique à la fonction de réinitialisation $F_{réin}$ du premier module de traitement 12A.

Les moyens de modification 30B du deuxième module de traitement 12B sont propres à modifier la valeur courante de la variable de cryptage $V_{CB}$ stockée au sein des premiers moyens de mémorisation 20B. La valeur courante à l'instant $\underline{i}$ de la variable de cryptage $V_{CB}$ est exprimée comme suit :

$$V_{CB}(i) = F_{réin}\,[S_{pa}(i), V_{CB}(i-1)] \qquad (4)$$

Le deuxième module de traitement 12B est ainsi propre à calculer et à fournir, en entrée de l'organe de calcul 14, une donnée de sortie intermédiaire $D_{IB}$ et un code de sécurité intermédiaire $C_{SIB}$. La donnée de sortie intermédiaire $D_{IB}$ et le code de sécurité intermédiaire $C_{SIB}$ sont exprimés comme suit :

$$D_{IB} = \sigma\,(\underline{De}) \qquad (5)$$

$$C_{SIB} = Fc\,(F_1(D_{IB}, M_B), V_{CB}) \qquad (6)$$

5

$F_1$, respectivement $M_B$, sont une fonction, respectivement une constante, stockées dans les premiers moyens de mémorisation 20B. La fonction $F_1$ est identique à la fonction $F_1$ du premier module de traitement 12A. Dans l'exemple de réalisation, $M_B$ est une constante formée d'une combinaison de seize bits. $M_B$ est par exemple formée d'une combinaison de huit premiers bits dont la valeur est égale à zéro et de huit derniers bits dont la valeur est égale à un.

Dans l'exemple de réalisation décrit, la donnée de sortie intermédiaire $D_{IB}$ est une variable formée d'une combinaison de seize bits.

A chaque instant $\underline{i}$, les valeurs des variables de cryptage $V_{CA}$, respectivement $V_{CB}$ du module de traitement 12A, respectivement 12B, vérifient entre elles une même relation mathématique, par exemple la relation mathématique suivante :

$$F_2 \left[ V_{CA}(i), V_{CB}(i) \right] = K \qquad\qquad (7),$$

où $F_2$ est par exemple la fonction logique « OU exclusif » et K est une constante. Dans l'exemple de réalisation, K est une constante formée d'une combinaison de seize bits.

Les modules de traitement 12A, 12B sont propres à s'échanger des données selon un protocole de communication synchronisé, via leurs moyens de communication et leurs moyens de synchronisation respectifs.

L'organe de calcul 14 fournit en entrée des moyens d'émission 18 la donnée de sortie $\underline{Ds}$ ainsi que le code de sécurité $C_S$. L'organe 14 comporte des deuxièmes moyens de mémorisation 42 et des deuxièmes moyens de calcul 44, reliés aux deuxièmes moyens de mémorisation 42.

Les deuxièmes moyens de mémorisation 42 sont formés, par exemple, d'une mémoire flash. Les deuxièmes moyens de mémorisation 42 sont propres à stocker une constante de décryptage $K_D$ et une fonction de consolidation $F_{conso}$. Dans l'exemple de réalisation, la fonction de consolidation $F_{conso}$ est la fonction logique « OU exclusif » et la constante de décryptage $K_D$ est une constante formée d'une combinaison de seize bits.

Dans l'exemple de réalisation décrit, les deuxièmes moyens de calcul 44 sont formés d'un processeur de données. Les deuxièmes moyens de calcul 44 sont reliés d'une part à chacun des premiers moyens de calcul 22A, 22B et d'autre part aux moyens d'émission 18. Les deuxièmes moyens de calcul 44 fournissent en entrée des moyens d'émission 18 la donnée de sortie $\underline{Ds}$ et le code de sécurité $C_S$. Les deuxièmes moyens de calcul 44 sont propres à calculer la valeur de la donnée de sortie $\underline{Ds}$ à partir de la valeur des données de sortie intermédiaires $D_{IA}$, $D_{IB}$. La valeur de la donnée de sortie $\underline{Ds}$ est, dans l'exemple de réalisation, prise comme égale à la valeur de la donnée de sortie intermédiaire $D_{IA}$. En variante, la valeur de la donnée de sortie $\underline{Ds}$ est prise comme égale à la valeur de la donnée de sortie intermédiaire $D_{IB}$.

Les deuxièmes moyens de calcul 44 sont propres en outre à calculer la valeur du code de sécurité $C_S$ à partir de la valeur de chaque code de sécurité intermédiaire $C_{SIA}$, $C_{SIB}$ et de la valeur de la constante de décryptage $K_D$. Le code de sécurité $C_S$ est par exemple exprimé comme suit :

$$C_S = F_{conso} \left( C_{SIA}, C_{SIB}, K_D \right) \qquad\qquad (8)$$

Les moyens d'émission 18 sont propres à transmettre la donnée de sortie $\underline{Ds}$ et le code de sécurité $C_S$ au dispositif de réception 8.

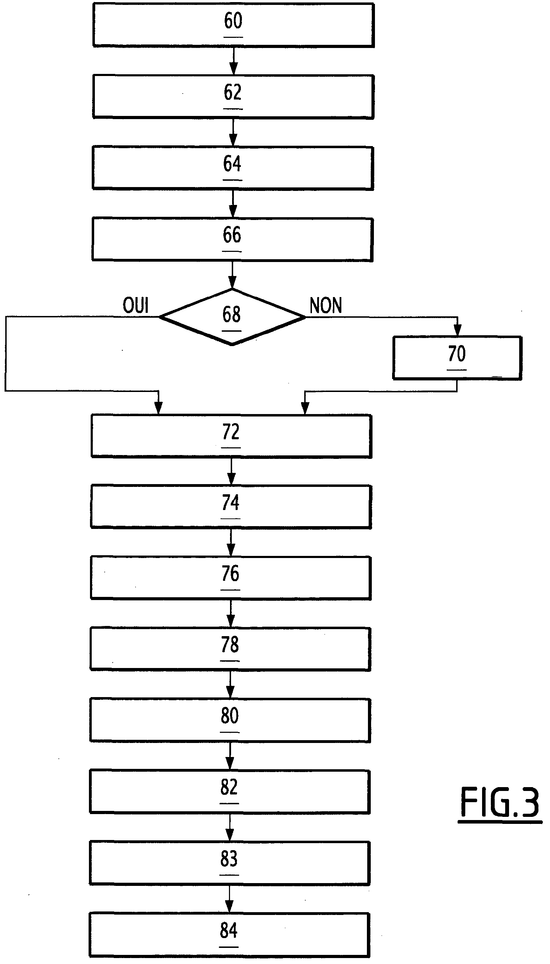

Sur la figure 3 sont représentées les étapes d'un procédé de fiabilisation de données mis en oeuvre par le calculateur 6, dans un mode de réalisation de l'invention.

Dans la suite de la description, on considère que la probabilité d'apparition d'une défaillance simultanée dans les modules de traitement 12A, 12B est nulle.

On suppose en outre qu'à l'instant présent $\underline{i\text{-}L}$, les premiers moyens de mémorisation 20A, respectivement 20B stockent une valeur courante $V_{CA}(i\text{-}1)$, respectivement $V_{CB}(i\text{-}1)$ de la variable de cryptage $V_{CA}$, respectivement $V_{CB}$.

Lors d'une étape 60 initiale, les moyens de réception 11 reçoivent un message comportant la donnée d'entrée $\underline{De}$.

Au cours d'une étape 62 suivante, les moyens de réception 11 fournissent la donnée d'entrée $\underline{De}$ à chacun des premiers moyens de calcul 22A, 22B.

Au cours d'une étape 64 suivante, les premiers moyens de calcul 22A, respectivement 22B, calculent la valeur courante de la donnée de sortie intermédiaire $D_{IA}$, respectivement $D_{IB}$ à partir de la valeur courante de la donnée d'entrée $\underline{De}$. L'expression de la donnée de sortie intermédiaire $D_{IA}$, respectivement $D_{IB}$ est donnée par la formule (1), respectivement la formule (5).

En complément, au cours d'une étape 66 suivante, les premiers moyens de calcul 22A, respectivement 22B, transmettent la valeur courante de la donnée de sortie intermédiaire $D_{IA}$, respectivement $D_{IB}$, aux moyens d'émission 31A, respectivement 31 B. Les moyens d'émission 31A, respectivement 31B, transmettent alors la valeur courante de la donnée de sortie intermédiaire $D_{IA}$, respectivement $D_{IB}$ aux moyens de réception 32B, respectivement 32A, via la liaison de données 34, respectivement 35. Les moyens de réception 32B, respectivement 32A, transmettent la valeur courante de la donnée de sortie intermédiaire $D_{IA}$, respectivement $D_{IB}$ aux premiers moyens de calcul 22B, respectivement 22A.

En complément, au cours d'une étape 68 suivante, chacun des premiers moyens de calcul 22A, 22B détermine s'il existe une valeur majoritaire parmi les valeurs courantes des données de sortie intermédiaires $D_{IA}$, $D_{IB}$.

Si à l'issue de l'étape 68, chacun des premiers moyens de calcul 22A, 22B détermine qu'il n'existe pas de valeur majoritaire parmi les valeurs courantes des données de sortie intermédiaires $D_{IA}$, $D_{IB}$, les moyens d'effacement 26A effacent la valeur courante de la variable de cryptage $V_{CA}$ dans les premiers moyens de mémorisation 20A au cours d'une étape 70. En variante, les moyens d'effacement 26B effacent la valeur courante de la variable de cryptage $V_{CB}$ dans les premiers moyens de mémorisation 20B au cours de l'étape 70. En complément, une étape 72 suivante est alors mise en oeuvre par les processeurs 40A, 40B, comme décrit par la suite.

Si à l'issue de l'étape 68, chacun des premiers moyens de calcul 22A, 22B détermine qu'il existe une valeur majoritaire parmi les valeurs courantes des données de sortie intermédiaires $D_{IA}$, $D_{IB}$, l'étape 72 est effectuée.

L'étape 72 se déclenche à l'instant $\underline{i}$ suivant immédiatement la fin de l'étape 68 ou de l'étape 70. A l'instant $\underline{i}$, les valeurs courantes $V_{CA}(i-1)$, $V_{CB}(i-1)$ des variables de cryptage $V_{CA}$, $V_{CB}$ deviennent des valeurs précédentes. A ce même instant $\underline{i}$, le processeur 40A, respectivement 40B, détermine la valeur courante $V_{CA}(i)$, respectivement $V_{CB}(i)$ de la variable de cryptage $V_{CA}$, respectivement $V_{CB}$ à partir de la valeur précédente $V_{CA}(i-1)$, respectivement $V_{CB}(i-1)$ de ladite variable de cryptage. L'étape 72 est ainsi effectuée de manière synchronisée entre les modules de traitement 12A, 12B. L'expression de la valeur courante de la variable de cryptage $V_{CA}$, respectivement $V_{CB}$ à l'instant $\underline{i}$ est donnée par la formule (3), respectivement la formule (4).

Au cours d'une étape 74 suivante, le processeur 22A, respectivement 22B, calcule la valeur courante du code de sécurité intermédiaire $C_{SIA}$, respectivement $C_{SIB}$, à partir de la valeur courante de la donnée de sortie intermédiaire $D_{IA}$, respectivement $D_{IB}$, et de la valeur courante de la variable de cryptage $V_{CA}$, respectivement $V_{CB}$. L'expression du code de sécurité intermédiaire $C_{SIA}$, respectivement $C_{SIB}$, est donnée par la formule (2), respectivement la formule (6).

Au cours d'une étape 76 suivante, les premiers moyens de calcul 22A, respectivement 22B, transmettent la donnée de sortie intermédiaire $D_{IA}$, respectivement $D_{IB}$ et le code de sécurité intermédiaire $C_{SIA}$, respectivement $C_{SIB}$ aux deuxièmes moyens de calcul 44.

Au cours d'une étape 78 suivante, les deuxièmes moyens de calcul 44 calculent la valeur courante du code de sécurité $C_S$ à partir de la valeur courante de chaque code de sécurité intermédiaire $C_{SIA}$, $C_{SIB}$ et de la valeur de la constante de décryptage $K_D$. L'expression du code de sécurité $C_S$ est donnée par la formule (8).

Au cours d'une étape 80 suivante, les deuxièmes moyens de calcul 44 sélectionnent une valeur parmi les valeurs des données de sortie intermédiaire $D_{IA}$, $D_{IB}$. La valeur sélectionnée est par exemple la valeur courante de la donnée de sortie intermédiaire $D_{IA}$. La valeur courante de la donnée de sortie $\underline{Ds}$ est prise égale à la valeur sélectionnée, autrement dit égale à la valeur courante de la donnée de sortie intermédiaire $\underline{D_{IA}}$.

Au cours d'une étape 82 suivante, les deuxièmes moyens de calcul 44 transmettent la donnée de sortie $\underline{Ds}$ et le code de sécurité $C_S$ aux moyens d'émission 18. Les moyens d'émission 18 transmettent alors la donnée de sortie $\underline{Ds}$ et le code de sécurité $C_S$ au dispositif de réception 8.

Au cours d'une étape 83 suivante, le dispositif de réception 8 reçoit la donnée de sortie $\underline{Ds}$ et le code de sécurité $C_S$.

Au cours d'une étape 84 suivante, le dispositif de réception 8 vérifie, par mise en oeuvre de l'algorithme de contrôle, la cohérence entre la donnée de sortie $\underline{Ds}$ et le code de sécurité $C_S$.

Selon un premier aspect de l'invention, le procédé de fiabilisation de données selon l'invention permet ainsi d'assurer la fonction de « vote majoritaire » du calculateur. En effet, si les valeurs des données de sortie intermédiaires $D_{IA}$, $D_{IB}$ sont identiques, la donnée de sortie $\underline{Ds}$ prend pour valeur la valeur majoritaire, en l'occurrence l'unique valeur possible. Par ailleurs, si les valeurs des données de sortie intermédiaires $D_{IA}$, $D_{IB}$ diffèrent, le code de sécurité $C_S$ prend une valeur particulière, différente de la valeur qu'il prend lorsque les valeurs des données de sortie intermédiaires $D_{IA}$, $D_{IB}$ sont identiques.

Ainsi, si les valeurs des données de sortie intermédiaires $D_{IA}$, $D_{IB}$ diffèrent, le dispositif de réception 8 détermine une incohérence entre la donnée de sortie $\underline{Ds}$ émise et le code de sécurité $C_S$. Le dispositif de réception 8 refuse alors la donnée de sortie $\underline{Ds}$. Le calculateur 6 mettant en oeuvre le procédé selon l'invention permet donc de fournir dans tous les cas soit une donnée de sortie $\underline{Ds}$ correcte, soit une donnée de sortie $\underline{Ds}$ erronée mais détectable.

Selon un deuxième aspect de l'invention, indépendant et complémentaire du premier aspect, le procédé de fiabilisation de données permet d'assurer la fonction de « passivation » du calculateur 6. Plus particulièrement, les étapes 66, 68 et 70 correspondent à la mise en oeuvre de cette fonction de « passivation ».

L'étape 72 de réinitialisation permet par ailleurs avantageusement au calculateur 6 d'auto-tester de manière périodique la fonction de « passivation », et de se prémunir ainsi contre le risque de défaillance des moyens d'effacement 26A, 26B. Ce risque correspond à une impossibilité pour les moyens d'effacement d'effacer la variable de cryptage $V_{CA}$, respectivement $V_{CB}$ dans les premiers moyens de mémorisation 20A, respectivement 20B. En outre, en cas de défaillance survenant dans un des modules de traitement au cours de l'étape 72 de réinitialisation, la relation mathématique de la formule (7), vérifiée théoriquement à chaque instant $i$ par les variables de cryptage $V_{CA}$, $V_{CB}$ entre elles, n'est plus vérifiée. Grâce à cette caractéristique la fonction de « passivation » du calculateur 6 continue d'être assurée en permanence, même en cas de défaillance dans un des modules de traitement lors de l'étape 72.

On conçoit ainsi que le procédé de fiabilisation de données selon ce mode de réalisation de l'invention permet de s'affranchir de l'utilisation de moyens matériels dédiés pour assurer la fonction de vote majoritaire du calculateur.

Ce mode de réalisation constitue le mode de réalisation préférentiel de l'invention.

L'homme du métier comprendra que l'invention s'applique de la même manière à un procédé de fiabilisation de données ne comportant pas les étapes 66, 68, 70 et 72.

En variante non représentée, le calculateur comporte un nombre N1 de modules 12 de traitement de données, N1 étant un entier supérieur ou égal à trois. Chaque module de traitement 12 comporte des premiers moyens de mémorisation 20 et des premiers moyens de calcul 22. Les premiers moyens de mémorisation 20 d'un module de traitement 12 sont propres à stocker une variable de cryptage $V_C$, propre au module. Chacun des premiers moyens de calcul 22 reçoit la donnée d'entrée $De$ et fournit en entrée de l'organe 14 une donnée de sortie intermédiaire $D_I$ et un code de sécurité intermédiaire $C_{SI}$. De manière analogue au mode de réalisation préférentiel de l'invention, les modules de traitement 12 sont propres à s'échanger des données selon un protocole de communication synchronisé, via leurs moyens de communication et leurs moyens de synchronisation respectifs. En outre, les fonctions de calcul $\sigma$, les fonctions de cryptage Fc et les fonctions de réinitialisation $F_{réin}$ de chacun des modules de traitement sont identiques.

Selon cette variante de réalisation, chacun des premiers moyens de calcul 22 est propre en outre à vérifier la correspondance entre la valeur de la donnée de sortie intermédiaire $D_I$ correspondante et une éventuelle valeur majoritaire. En outre, le procédé comporte deux étapes supplémentaires 86, 88. Les étapes 86, 88 sont effectuées entre l'étape 68 et l'étape 72 si à l'issue de l'étape 68, chacun des premiers moyens de calcul 22 détermine qu'il existe une valeur majoritaire parmi les valeurs des données de sortie intermédiaires $D_I$.

Lors de l'étape 86, chacun des premiers moyens de calcul 22 vérifie si la valeur de sa donnée de sortie intermédiaire $D_I$ est égale à la valeur majoritaire.

Si à l'issue de l'étape 86, chacun des premiers moyens de calcul 22 vérifie que la valeur de sa donnée de sortie intermédiaire $D_I$ est égale à la valeur majoritaire, l'étape 72 est effectuée.

Si à l'issue de l'étape 86, au moins un des premiers moyens de calcul 22 vérifie que la valeur de sa donnée de sa sortie intermédiaire $D_I$ n'est pas égale à la valeur majoritaire, les moyens d'effacement du module de traitement correspondant effacent la valeur courante de la variable de cryptage $V_C$ dans les premiers moyens de mémorisation 20 au cours de l'étape 88.

L'homme du métier comprendra que, lors de l'étape 76, les premiers moyens de calcul 22 de chaque module de traitement 12 transmettent la donnée de sortie intermédiaire $D_I$ correspondante et le code de sécurité intermédiaire $C_{SI}$ correspondant, aux deuxièmes moyens de calcul 44 de l'organe de calcul 14.

Lors de l'étape 78 suivante, les deuxièmes moyens de calcul 44 calculent la valeur courante du code de sécurité $C_S$ à partir de la valeur courante de chaque code de sécurité intermédiaire $C_{SI}$ transmis lors de l'étape 76.

Lors de l'étape 80 suivante, les deuxièmes moyens de calcul 44 sélectionnent une valeur parmi les valeurs des données de sortie intermédiaire $D_I$ transmises lors de l'étape 76. La valeur courante de la donnée de sortie $Ds$ est alors prise égale à la valeur sélectionnée.

Au cours de l'étape 82 suivante, les deuxièmes moyens de calcul 44 transmettent la donnée de sortie $Ds$ et le code de sécurité $C_S$ aux moyens d'émission 18. Les moyens d'émission 18 transmettent alors la donnée de sortie $Ds$ et le code de sécurité $C_S$ au dispositif de réception 8.

Au cours de l'étape 83 suivante, le dispositif de réception 8 reçoit la donnée de sortie $Ds$ et le code de sécurité $C_S$.

Au cours de l'étape 84 suivante, le dispositif de réception 8 vérifie, par mise en oeuvre de l'algorithme de contrôle, la cohérence entre la donnée de sortie $Ds$ et le code de sécurité $C_S$.

Selon une autre variante de réalisation particulière, non représentée, le calculateur comporte trois modules 12A, 12B, 12C de traitement de données. La condition de « vote majoritaire » est alors remplie lorsqu'au moins deux des trois modules ont produit des données de sorties cohérentes à partir de la même donnée d'entrée.

Un calculateur ainsi constitué comporte alors trois couples (12A ; 12B), (12B ; 12C) et (12C ; 12A) de modules de traitement, chaque module 12A, 12B, 12C appartenant à deux couples.

Dans chaque module de traitement 12A, 12B, 12C, le processus de génération du code de sécurité intermédiaire est alors doublé. En particulier, deux codes de sécurité intermédiaires $C_{SI-AB}$, $C_{SI-AC}$, $C_{SI-BA}$, $C_{SI-BC}$, $C_{SI-CA}$, $C_{SI-CB}$ sont générés par chaque module 12A, 12B, 12C. Plus précisément, chaque module 12A, 12B, 12C génère un code pour chaque couple (12A ; 12B), (12B ; 12C), (12C ; 12A) auquel il appartient.

Les premiers moyens de mémorisation 20 de chaque module 12A, 12B, 12C sont propres à stocker deux variables de cryptage Vc1 et Vc2, relatives au module.

Chacun des premiers moyens de calcul 22 reçoit la donnée d'entrée De et fournit en entrée de l'organe 14 une donnée intermédiaire $D_I$ et deux codes de sécurité intermédiaires $C_{SI}$ : le module 12A calcule deux codes $C_{SI-AB}$ et $C_{SI-AC}$ ; le module 12B calcule deux codes $C_{SI-BA}$ et $C_{SI-BC}$ ; le module 12C calcule deux codes $C_{SI-CA}$ et $C_{SI-CB}$.

L'organe 14 sélectionne un couple de modules parmi les trois couples possibles (12A ; 12B), (12B ; 12C), (12C ; 12A), sur la base d'un vote majoritaire des données $D_I$ reçues.

L'organe 14 calcule alors le code de sécurité $C_S$ à partir des codes de sécurité intermédiaires associés au couple sélectionné. Ainsi, si le couple (12A ; 12B) a été sélectionné alors le code de sécurité $C_S$ est calculé à partir des codes intermédiaires $C_{SI-AB}$ et $C_{SI-BA}$.

On conçoit ainsi que le procédé de fiabilisation de données selon l'invention permet de s'affranchir de l'utilisation de moyens matériels dédiés pour assurer la fonction de vote majoritaire et de passivation du calculateur.

**Revendications**

1. Procédé de fiabilisation de données dans un calculateur (6), le calculateur (6) étant propre à fournir une donnée de sortie (Ds) à partir d'une donnée d'entrée (De), et comportant au moins deux modules (12A, 12B) de traitement de données, et un organe de calcul (14) relié à chaque module de traitement (12A, 12B),
le procédé comprenant une étape (64) de calcul, par chaque module de traitement (12A, 12B), d'une donnée intermédiaire ($D_{IA}$, $D_{IB}$) à partir de la donnée d'entrée (De), ledit calcul consistant en l'application d'une fonction de calcul ($\sigma$) à la donnée d'entrée (De), la fonction de calcul ($\sigma$) étant identique pour tous les modules de traitement (12A, 12B),
le procédé étant **caractérisé en ce qu'**il comprend les étapes suivantes :

   - le calcul (74), par chaque module de traitement (12A, 12B), d'un code de sécurité intermédiaire ($C_{SIA}$, $C_{SIB}$) à partir de la donnée intermédiaire ($D_{IA}$, $D_{IB}$) correspondante,
   - la transmission (76) à l'organe de calcul (14), par chaque module de traitement (12A, 12B), du code de sécurité intermédiaire ($C_{SIA}$, $C_{SIB}$) et de la donnée intermédiaire ($D_{IA}$, $D_{IB}$),
   - le calcul (78), par l'organe de calcul (14), d'un code de sécurité ($C_S$) à partir des codes de sécurité intermédiaires ($C_{SIA}$, $C_{SIB}$),
   - la sélection (80), par l'organe de calcul (14), d'une donnée intermédiaire parmi les données intermédiaires ($D_{IA}$, $D_{IB}$) reçues, la donnée de sortie (Ds) du calculateur (6) comprenant la donnée intermédiaire sélectionnée, et
   - la transmission (82) à destination d'un dispositif de réception (8), par l'organe de calcul (14), du code de sécurité ($C_S$) et de la donnée de sortie (Ds).

2. Procédé selon la revendication 1, **caractérisé en ce que** chaque module de traitement (12A, 12B) comporte des premiers moyens de mémorisation (20A, 20B) d'au moins une variable de cryptage ($V_{CA}$, $V_{CB}$) et d'une fonction de cryptage (Fc), la fonction de cryptage (Fc) étant identique pour tous les modules de traitement (12A, 12B), et **en ce que** lors de l'étape (74) de calcul d'un code de sécurité intermédiaire ($C_{SIA}$, $C_{SIB}$) à partir de la donnée intermédiaire ($D_{IA}$, $D_{IB}$) correspondante, ledit calcul consiste à appliquer, par chaque module de traitement (12A, 12B), la fonction de cryptage (Fc) au moins à la donnée intermédiaire ($D_{IA}$, $D_{IB}$) et à la variable de cryptage ($V_{CA}$, $V_{CB}$).

3. Procédé selon la revendication 1 ou 2, **caractérisé en ce que** l'organe de calcul (14) comporte des deuxièmes moyens de mémorisation (42) d'au moins une constante de décryptage ($K_D$) et une fonction de consolidation ($F_{conso}$), et **en ce que** lors de l'étape (78) de calcul d'un code de sécurité ($C_S$) à partir des codes de sécurité intermédiaires ($C_{SIA}$, $C_{SIB}$), ledit calcul consiste à appliquer, par l'organe de calcul (14), la fonction de consolidation ($F_{conso}$) à chaque code de sécurité intermédiaire ($C_{SIA}$, $C_{SIB}$) reçu et à la constante de décryptage ($K_D$).

4. Procédé selon la revendication 2 ou 3, **caractérisé en ce qu'**il comporte en outre, entre l'étape (64) de calcul d'une donnée intermédiaire et l'étape (74) de calcul d'un code de sécurité intermédiaire, une étape (66) de transmission, par chaque module de traitement (12A, 12B), de la valeur de sa donnée intermédiaire ($D_{IA}$, $D_{IB}$) aux autres modules de traitement (12A, 12B) et une étape (68) de test, par chaque module de traitement (12A, 12B), de l'existence d'une valeur majoritaire parmi l'ensemble des valeurs des données intermédiaires ($D_{IA}$, $D_{IB}$), la valeur majoritaire étant la valeur la plus fréquente parmi les valeurs de données intermédiaires ($D_{IA}$, $D_{IB}$), si cette valeur existe.

5. Procédé selon la revendication 4, **caractérisé en ce que** si le test d'existence d'une valeur majoritaire est négatif lors de l'étape (68) de test correspondante, le procédé comporte une étape (70) de suppression par l'un des modules de traitement (12A, 12B) de sa variable de cryptage ($V_{CA}$, $V_{CB}$).

**6.** Procédé selon l'une des revendications 2 à 5, **caractérisé en ce qu'**il comporte en outre, avant l'étape (74) de calcul d'un code de sécurité intermédiaire, une étape (72) de réinitialisation, par chaque module de traitement (12A, 12B), de sa variable de cryptage ($V_{CA}$, $V_{CB}$), ladite étape (72) de réinitialisation étant effectuée de manière synchronisée entre tous les modules de traitement (12A, 12B).

**7.** Procédé selon l'une quelconque des revendications précédentes, **caractérisé en ce que** la donnée de sortie (Ds) est la donnée intermédiaire sélectionnée par l'organe de calcul (14) lors de l'étape (80) de sélection.

**8.** Procédé selon l'une quelconque des revendications précédentes, **caractérisé en ce qu'**il comporte en outre une étape (83) de réception, par le dispositif de réception (8), du code de sécurité ($C_S$) et de la donnée de sortie (Ds) et une étape (84) de vérification, par le dispositif de réception (8), de la cohérence entre le code de sécurité ($C_S$) et la donnée de sortie (Ds).

**9.** Procédé selon l'une quelconque des revendications précédentes, **caractérisé en ce que** le calculateur comporte trois modules de traitement de données, les trois modules de traitement étant répartis en trois couples de modules, chaque module appartenant à deux couples distincts, **en ce que** chaque module de traitement calcule deux codes de sécurité intermédiaires à partir de la donnée intermédiaire correspondante, chaque code de sécurité intermédiaire étant associé à un des deux couples auquel appartient le module, **en ce que** chaque module de traitement transmet à l'organe de calcul (14) la donnée intermédiaire et les deux codes de sécurité intermédiaires associés, **en ce que** l'organe de calcul (14) calcule le code de sécurité (Cs) à partir d'un premier code de sécurité intermédiaire transmis par un des modules de traitement et associé à un premier couple de modules, et d'un deuxième code de sécurité intermédiaire transmis par un autre module, ledit deuxième code de sécurité intermédiaire étant associé au premier couple de modules, et **en ce que** la donnée intermédiaire sélectionnée par l'organe de calcul (14) est une des données intermédiaires associées aux modules du premier couple de modules.

**10.** Calculateur (6) propre à fournir une donnée de sortie (Ds) à partir d'une donnée d'entrée (De), comportant :

- au moins deux modules (12A, 12B) de traitement de données, chaque module de traitement (12A, 12B) comportant des premiers moyens (22A, 22B) de calcul d'une donnée intermédiaire ($D_{IA}$, $D_{IB}$) à partir de la donnée d'entrée (De), lesdits premiers moyens de calcul étant propres à appliquer une fonction de calcul ($\sigma$) à la donnée d'entrée (De), la fonction de calcul ($\sigma$) étant identique pour tous les modules de traitement (12A, 12B),
- un organe de calcul (14) relié à chaque module de traitement (12A, 12B),

**caractérisé en ce que** les premiers moyens (22A, 22B) de calcul sont propres en outre à calculer un code de sécurité intermédiaire ($C_{SIA}$, $C_{SIB}$) à partir de la donnée intermédiaire ($D_{IA}$, $D_{IB}$) correspondante, chaque module de traitement (12A, 12B) étant propre à transmettre à l'organe de calcul (14) le code de sécurité intermédiaire ($C_{SIA}$, $C_{SIB}$) et la donnée intermédiaire ($D_{IA}$, $D_{IB}$) correspondante, et **en ce que** l'organe de calcul (14) comporte des deuxièmes moyens (44) de calcul d'un code de sécurité ($C_S$) à partir des codes de sécurité intermédiaires ($C_{SIA}$, $C_{SIB}$), l'organe de calcul (14) étant propre à sélectionner une donnée intermédiaire parmi les données intermédiaires ($D_{IA}$, $D_{IB}$) reçues et à transmettre le code de sécurité ($C_S$) et la donnée de sortie (Ds) à un dispositif de réception (8), la donnée de sortie (Ds) comprenant la donnée intermédiaire sélectionnée.

**11.** Ensemble de communication (2) comportant un calculateur (6) et un dispositif (8) de réception de données, le calculateur (6) étant propre à fournir un code de sécurité ($C_S$) et une donnée (Ds), le dispositif de réception (8) comportant des moyens de mémorisation d'un algorithme de contrôle, le dispositif de réception (8) étant propre à recevoir le code de sécurité ($C_S$) et la donnée de sortie (Ds), et à vérifier, par la mise en oeuvre de l'algorithme de contrôle, la cohérence entre le code de sécurité ($C_S$) et la donnée de sortie (Ds), **caractérisé en ce que** le calculateur (6) est conforme à la revendication 10.

**12.** Système de gestion ferroviaire (1) **caractérisé en ce qu'**il comprend au moins un ensemble (2) selon la revendication 11.

**Patentansprüche**

**1.** Verfahren zur Zuverlässigkeitssteigerung von Daten in einem Rechner (6), wobei sich der Rechner (6) dazu eignet, ein Ausgangsdatenelement (Ds) aus einem Eingangsdatenelement (De) bereitzustellen, und mindestens zwei Datenverarbeitungsmodule (12A, 12B) und ein Rechenglied (14) umfasst, das mit jedem Verarbeitungsmodul (12A, 12B) verbunden ist,

wobei das Verfahren einen Schritt (64) zum Berechnen, durch jedes Verarbeitungsmodul (12A, 12B), eines Zwischendatenelements ($D_{IA}$, $D_{IB}$) aus dem Eingangsdatenelement (De) umfasst, wobei das Berechnen aus der Anwendung einer Rechenfunktion ($\sigma$) auf das Eingangsdatenelement (De) besteht, wobei die Rechenfunktion ($\sigma$) für alle Verarbeitungsmodule (12A, 12B) gleich ist,

wobei das Verfahren **dadurch gekennzeichnet ist, dass** es die folgenden Schritte umfasst:

- das Berechnen (74), durch jedes Verarbeitungsmodul (12A, 12B), eines Zwischensicherheitscodes ($C_{SIA}$, $C_{SIB}$) aus dem entsprechenden Zwischendatenelement ($D_{IA}$, $D_{IB}$),
- das Übertragen (76) an das Rechenglied (14), durch jedes Verarbeitungsmodul (12A, 12B), des Zwischensicherheitscodes ($C_{SIA}$, $C_{SIB}$) und des Zwischendatenelements ($D_{IA}$, $D_{IB}$),
- das Berechnen (78), durch das Rechenglied (14), eines Sicherheitscodes ($C_S$) aus den Zwischensicherheitscodes ($C_{SIA}$, $C_{SIB}$),
- das Auswählen (80), durch das Rechenglied (14), eines Zwischendatenelements aus den empfangenen Zwischendatenelementen ($D_{IA}$, $D_{IB}$), wobei das Ausgangsdatenelement (Ds) des Rechners (6) das ausgewählte Zwischendatenelement umfasst, und
- das Übertragen (82) mit Ziel einer Empfangsvorrichtung (8), durch das Rechenglied (14), des Sicherheitscodes ($C_S$) und des Ausgangsdatenelements (Ds).

2. Verfahren nach Anspruch 1, **dadurch gekennzeichnet, dass** jedes Verarbeitungsmodul (12A, 12B) erste Speichereinrichtungen (20A, 20B) für mindestens eine Verschlüsselungsvariable ($V_{CA}$, $V_{CB}$) und eine Verschlüsselungsfunktion (Fc) umfasst, wobei die Verschlüsselungsfunktion (Fc) für alle Verarbeitungsmodule (12A, 12B) gleich ist, und dass beim Schritt des Berechnens (74) eines Zwischensicherheitscodes ($C_{SIA}$, $C_{SIB}$) aus dem entsprechenden Zwischendatenelement ($D_{IA}$, $D_{IB}$) das Berechnen darin besteht, durch jedes Verarbeitungsmodul (12A, 12B) die Verschlüsselungsfunktion (Fc) auf zumindest das Zwischendatenelement ($D_{IA}$, $D_{IB}$) und die Verschlüsselungsvariable ($V_{CA}$, $V_{CB}$) anzuwenden.

3. Verfahren nach Anspruch 1 oder 2, **dadurch gekennzeichnet, dass** das Rechenglied (14) zweite Speichereinrichtungen (42) für mindestens eine Entschlüsselungskonstante ($K_D$) und eine Konsolidierungsfunktion ($F_{CONSO}$) umfasst, und dass beim Schritt (78) zum Berechnen eines Sicherheitscodes ($C_S$) aus den Zwischensicherheitscodes ($C_{SIA}$, $C_{SIB}$) das Berechnen darin besteht, durch das Rechenglied (14) die Konsolidierungsfunktion ($F_{CONSO}$) auf jeden empfangenen Zwischensicherheitscode ($C_{SIA}$, $C_{SIB}$) und die Entschlüsselungskonstante ($K_D$) anzuwenden.

4. Verfahren nach Anspruch 2 oder 3, **dadurch gekennzeichnet, dass** es darüber hinaus zwischen dem Schritt (64) zum Berechnen eines Zwischendatenelements und dem Schritt (74) zum Berechnen eines Zwischensicherheitscodes einen Schritt (66) zum Übertragen, durch jedes Verarbeitungsmodul (12A, 12B), des Werts seines Zwischendatenelements ($D_{IA}$, $D_{IB}$) an die anderen Verarbeitungsmodule (12A, 12B) und eines Schritt (68) des Prüfens, durch jedes Verarbeitungsmodul (12A, 12B), des Bestehens eines mehrheitlichen Werts unter allen Werten der Zwischendatenelemente ($D_{IA}$, $D_{IB}$) umfasst, wobei der mehrheitliche Wert der häufigste Wert unter den Werten der Zwischendatenelemente ($D_{IA}$, $D_{IB}$) ist, falls dieser Wert besteht.

5. Verfahren nach Anspruch 4, **dadurch gekennzeichnet, dass**, wenn das Prüfen eines Bestehens eines mehrheitlichen Werts beim entsprechenden Prüfschritt (68) negativ ist, das Verfahren einen Schritt (70) zum Unterbinden, durch eines der Verarbeitungsmodule (12A, 12B), seiner Verschlüsselungsvariable ($V_{CA}$, $V_{CB}$) umfasst.

6. Verfahren nach einem der Ansprüche 2 bis 5, **dadurch gekennzeichnet, dass** es darüber hinaus vor dem Schritt (74) zum Berechnen eines Zwischensicherheitscodes, einen Schritt (72) zum Reinitialisieren, durch jedes Verarbeitungsmodul (12A, 12B), seiner Verschlüsselungsvariable ($V_{CA}$, $V_{CB}$) umfasst, wobei der Schritt (72) zum Reinitialisieren zwischen allen Verarbeitungsmodulen (12A, 12B) auf synchronisierte Weise erfolgt.

7. Verfahren nach einem der vorhergehenden Ansprüche, **dadurch gekennzeichnet, dass** das Ausgangsdatenelement (Ds) das durch das Rechenglied (14) beim Auswahlschritt (80) ausgewählte Zwischendatenelement ist.

8. Verfahren nach einem der vorhergehenden Ansprüche, **dadurch gekennzeichnet, dass** es darüber hinaus einen Schritt (83) zum Empfangen, durch die Empfangsvorrichtung (8), des Sicherheitscodes ($C_S$) und des Ausgangsdatenelements (Ds) und einen Schritt (84) zum Überprüfen, durch die Empfangsvorrichtung (8), der Übereinstimmung zwischen dem Sicherheitscode ($C_S$) und dem Ausgangsdatenelement (Ds) umfasst.

9.  Verfahren nach einem der vorhergehenden Ansprüche, **dadurch gekennzeichnet, dass** der Rechner drei Datenverarbeitungsmodule umfasst, wobei die drei Verarbeitungsmodule in drei Modulepaare aufgeteilt sind, wobei jedes Modul zu zwei eigenständigen Paaren gehört, dass jedes Verarbeitungsmodul zwei Zwischensicherheitscodes aus dem entsprechenden Zwischendatenelement berechnet, wobei jeder Zwischensicherheitscode einem der zwei Paare, zu denen das Modul gehört, zugeordnet wird, dass jedes Verarbeitungsmodul an das Rechenglied (14) das Zwischendatenelement und die zwei zugeordneten Zwischensicherheitscodes überträgt, dass das Rechenglied (14) den Sicherheitscode ($C_S$) aus einem ersten Zwischensicherheitscode, der durch eines der Verarbeitungsmodule übertragen wurde und einem ersten Modulepaar zugeordnet ist, und einem zweiten Zwischensicherheitscode berechnet, der durch ein anderes Modul übertragen wurde, wobei der zweite Zwischensicherheitscode dem ersten Modulepaar zugeordnet ist, und dass das Zwischendatenelement, das durch das Rechenglied (14) ausgewählt wird, eines der Zwischendatenelemente ist, die dem ersten Modulepaar zugeordnet wurden.

10.  Rechner (6), der sich dazu eignet, ein Ausgangsdatenelement (Ds) aus einem Eingangsdatenelement (De) bereitzustellen, Folgendes umfassend:

     - mindestens zwei Datenverarbeitungsmodule (12A, 12B), wobei jedes Verarbeitungsmodul (12A, 12B) erste Einrichtungen (22A, 22B) zum Berechnen eines Zwischendatenelements ($D_{IA}$, $D_{IB}$) aus dem Eingangsdatenelement (De) umfasst, wobei sich die ersten Berechnungseinrichtungen dazu eignen, eine Rechenfunktion ($\sigma$) auf das Eingangsdatenelement (De) anzuwenden, wobei die Rechenfunktion ($\sigma$) für alle Verarbeitungsmodule (12A, 12B) gleich ist,
     - ein Rechenglied (14), das mit jedem Verarbeitungsmodul (12A, 12B) verbunden ist,

     **dadurch gekennzeichnet, dass** sich die ersten Berechnungseinrichtungen (22A, 22B) dazu eignen, darüber hinaus einen Zwischensicherheitscode ($C_{SIA}$, $C_{SIB}$) aus dem entsprechenden Zwischendatenelement ($D_{IA}$, $D_{IB}$) zu berechnen, wobei sich jedes Verarbeitungsmodul (12A, 12B) dazu eignet, an das Rechenglied (14) den Zwischensicherheitscode ($C_{SIA}$, $C_{SIB}$) und das entsprechende Zwischendatenelement ($D_{IA}$, $D_{IB}$) zu übertragen, und dass das Rechenglied (14) zweite Einrichtungen (44) zum Berechnen eines Sicherheitscodes ($C_S$) aus den Zwischensicherheitscodes ($C_{SIA}$, $C_{SIB}$) umfasst, wobei sich das Rechenglied (14) dazu eignet, ein Zwischendatenelement aus den empfangenen Zwischendatenelementen ($D_{IA}$, $D_{IB}$) auszuwählen und den Sicherheitscode ($C_S$) und das Ausgangsdatenelement (Ds) an eine Empfangsvorrichtung (8) zu übertragen, wobei das Ausgangsdatenelement (Ds) das ausgewählte Zwischendatenelement umfasst.

11.  Kommunikationseinheit (2), umfassend einen Rechner (6) und eine Datenempfangsvorrichtung (8), wobei sich der Rechner (6) dazu eignet, einen Sicherheitscode ($C_S$) und ein Datenelement (Ds) bereitzustellen, wobei die Empfangsvorrichtung (8) Speichereinrichtungen für einen Steueralgorithmus umfasst, wobei sich die Empfangsvorrichtung (8) dazu eignet, den Sicherheitscode ($C_S$) und das Ausgangsdatenelement (Ds) zu empfangen und durch die Umsetzung des Steueralgorithmus die Übereinstimmung zwischen dem Sicherheitscode ($C_S$) und dem Ausgangsdatenelement (Ds) zu überprüfen, **dadurch gekennzeichnet, dass** der Rechner (6) gemäß Anspruch 10 ist.

12.  Eisenbahn-Managementsystem (1), **dadurch gekennzeichnet, dass** es mindestens eine Einheit (2) nach Anspruch 11 umfasst.

**Claims**

1.  A method for enhancing the reliability of data in a computer (6), the computer (6) being capable of providing an output datum (Ds) from an input datum (De), and including at least two data processing modules (12A, 12B), and a computing member (14) connected to each processing module (12A, 12B),
    the method comprising a step (64) for computing, by each processing module (12A, 12B), an intermediate datum ($D_{IA}$, $D_{IB}$) from the input datum (De), said computation consisting in the application of a computing function ($\sigma$) to the input datum (De), the computing function ($\sigma$) being identical for all the processing modules (12A, 12B),
    the method being **characterized in that** it comprises the following steps:

     - computing (74), by each processing module (12A, 12B), an intermediate security code ($C_{SIA}$, $C_{SIB}$) from the corresponding intermediate datum ($D_{IA}$, $D_{IB}$),
     - transmitting (76) to the computing member (14), by each processing module (12A, 12B), the intermediate security code ($C_{SIA}$, $C_{SIB}$) and the intermediate datum ($D_{IA}$, $D_{IB}$),
     - computing (78), by the computing member (14), a security code ($C_S$) from the intermediate security codes

$(C_{SIA}, C_{SIB})$,
- selecting (80), by the computing member (14), an intermediate datum from the received intermediate data $(D_{IA}, D_{IB})$, the output datum (<u>Ds</u>) of the computer (6) comprising the selected intermediate datum, and
- transmitting (82) to a receiving device (8), by the computing member (14), the security code $(C_S)$ and the output datum (<u>Ds</u>).

2. The method according to claim 1, **characterized in that** each processing module (12A, 12B) includes first means (20A, 20B) for storing in memory at least one encryption variable $(V_{CA}, V_{CB})$ and an encryption function (Fc), the encryption function (Fc) being identical for all of the processing modules (12A, 12B), and **in that** during the step (74) for computing an intermediate security code $(C_{SIA}, C_{SIB})$ from the corresponding intermediate datum $(D_{IA}, D_{IB})$, said computation consists of applying, by each processing module (12A, 12B), the encryption function (Fc) to at least the intermediate datum $(D_{IA}, D_{IB})$ and the encryption variable $(V_{CA}, V_{CB})$.

3. The method according to claim 1 or 2, **characterized in that** the computing member (14) includes second means (42) for storing in memory at least one decryption constant $(K_D)$ and a consolidation function $(F_{conso})$, and that during the step (78) for computing a security code $(C_S)$ from intermediate security codes $(C_{SIA}, C_{SIB})$, said computation consists of applying, by the computing member (14), the consolidation function $(F_{conso})$ to each received intermediate security code $(C_{SIA}, C_{SIB})$ and to the decryption constant $(K_D)$.

4. The method according to claim 2 or 3, **characterized in that** it further includes, between the step (64) for computing an intermediate datum and the step (74) for computing an intermediate security code, a step (66) for transmitting, by each processing module (12A, 12B), the value of its intermediate datum $(D_{IA}, D_{IB})$ to the other processing modules (12A,. 12B) and a step (68) for testing, by each processing module (12A, 12B), the existence of a majority value from the whole of the values of the intermediate data $(D_{IA}, D_{IB})$, the majority value being the most frequent value among the values of intermediate data $(D_{IA}, D_{IB})$, if this value exists.

5. The method according to claim 4, **characterized in that**, if the test for existence of a majority value is negative during the corresponding testing step (68), the method includes a step (70) for suppressing by one of the processing modules (12A, 12B), its encryption variable $(V_{CA}, V_{CB})$.

6. The method according to one of claims 2 to 5, **characterized in that** it further includes before the step (74) for computing an intermediate security code, a step (72) for resetting, by each processing module (12A, 12B), its encryption variable $(V_{CA}, V_{CB})$, said reset step (72) being carried out in a synchronized way among all the processing modules (12A, 12B).

7. The method according to any one of the preceding claims, **characterized in that** the output datum (<u>Ds</u>) is the intermediate datum selected by the computing member (14) during the selection step (80).

8. The method according to any one of the preceding claims, **characterized in that** it further includes a step (83) for receiving, by the receiving device (8), the security code $(C_S)$ and the output datum (<u>Ds</u>) and a step (84) for checking, by the receiving device (8), the consistency between the security code $(C_S)$ and the output datum (<u>Ds</u>).

9. The method according to any one of the preceding claims, **characterized in that** the computer includes three data processing modules, the three processing modules being distributed in three pairs of modules, each module belonging to two distinct pairs, **in that** each processing module computes two intermediate security codes from the corresponding intermediate datum, each intermediate security code being associated with one of the two pairs to which belongs the module, **in that** each processing module transmits to the computing member (14) the intermediate datum and the two associated intermediate security codes, **in that** the computing member (14) computes the security code (Cs) from a first intermediate security code transmitted by one of the processing modules and associated with a first pair of modules, and from a second intermediate security code transmitted by another module, said second intermediate security code being associated with the first pair of modules, and **in that** the intermediate datum selected by the computing member (14) is one of the intermediate data associated with the modules of the first pair of modules.

10. A computer (6) capable of providing an output datum (<u>Ds</u>) from an input datum (<u>De</u>), including:

- at least two data processing modules (12A, 12B), each processing module (12A, 12B) including first means (22A, 22B) for computing an intermediate datum $(D_{IA}, D_{IB})$ from the input datum (<u>De</u>), said first computing means being able to apply a computing function ($\sigma$) to the input datum ($\underline{De}$), the computing function ($\sigma$) being identical for all the processing modules (12A, 12B),
- a computing member (14) connected to each processing module (12A, 12B), **characterized in that** the first computing means (22A, 22B) are further capable of computing an intermediate security code ($C_{SIA}$, $C_{SIB}$) from the corresponding intermediate datum ($D_{IA}$, $D_{IB}$), each processing module (12A, 12B) being capable of transmitting to the computing member (14) the intermediate security code ($C_{SIA}$, $C_{SIB}$) and the corresponding intermediate datum ($D_{IA}$, $D_{IB}$), and **in that** the computing member (14) includes second means (44) for computing a security code ($C_S$) from intermediate security codes ($C_{SIA}$, $C_{SIB}$), the computing member (14) being capable of selecting an intermediate datum among the received intermediate data ($D_{IA}$, $D_{IB}$) and of transmitting the security code ($C_S$) and the output datum ($\underline{Ds}$) to a receiving device (8), the output datum ($\underline{Ds}$) comprising the selected intermediate datum.

11. A communication unit (2) including a computer (6) and a data receiving device (8), the computer (6) being capable of providing a security code ($C_S$) and a datum ($\underline{Ds}$). the receiving device (8) including means for storing in memory a control algorithm, the receiving device (8) being capable of receiving the security code ($C_S$) and the output datum ($\underline{Ds}$), and of checking, by applying the control algorithm, the consistency between the security code ($C_S$) and the output datum ($\underline{Ds}$), **characterized in that** the computer (6) in accordance with claim 10.

12. A railway management system (1) **characterized in that** it comprises at least one unit (2) according to claim 11.

## FIG.1

FIG.2

```
┌─────────────────────────────┐
│              60              │
└─────────────────────────────┘
               │
               ▼
┌─────────────────────────────┐
│              62              │
└─────────────────────────────┘
               │
               ▼
┌─────────────────────────────┐
│              64              │
└─────────────────────────────┘
               │
               ▼
┌─────────────────────────────┐
│              66              │
└─────────────────────────────┘
               │
               ▼
     OUI      ╱◇╲      NON
   ◄────────┤  68  ├────────►
             ╲◇╱                    ┌──────────────┐
                                    │      70      │
                                    └──────────────┘
               │                           │
               ▼                           ▼
┌─────────────────────────────┐
│              72              │
└─────────────────────────────┘
               │
               ▼
┌─────────────────────────────┐
│              74              │
└─────────────────────────────┘
               │
               ▼
┌─────────────────────────────┐
│              76              │
└─────────────────────────────┘
               │
               ▼
┌─────────────────────────────┐
│              78              │
└─────────────────────────────┘
               │
               ▼
┌─────────────────────────────┐
│              80              │
└─────────────────────────────┘
               │
               ▼
┌─────────────────────────────┐
│              82              │
└─────────────────────────────┘
               │
               ▼
┌─────────────────────────────┐
│              83              │
└─────────────────────────────┘
               │
               ▼
┌─────────────────────────────┐
│              84              │
└─────────────────────────────┘
```

FIG.3